# FASCICULE DE BREVET EUROPEEN

(11) **EP 2 463 200 B1**
(45) Date de publication et mention de la délivrance du brevet: **05.06.2013**
(21) Numéro de dépôt: 11192416.3
(22) Date de dépôt: 07.12.2011
(51) Int. Cl.: B64G 1/22

(54) **Système de motorisation à couple adapté pour structures spatiales déployables**
Motorisierungssystem mit angepasstem Drehmoment für entfaltbare Raumfahrtstrukturen
Motorisation system with adapted torque for extendable space structures

(30) Priorité: 07.12.2010 FR 1004765
(43) Date de publication de la demande: 13.06.2012
(73) Titulaire: Thales, 92200 Neuilly Sur Seine (FR)
(72) Inventeur: Baudasse, Yannick, 06130 Grasse (FR); Vezain, Stéphane, 06210 Mandelieu-la-Napoule (FR)
(74) Mandataire: Collet, Alain

(56) Documents cités:
- FR-A1- 2 635 077
- FR-A1- 2 902 763
- US-A- 5 146 803

## Description

La présente invention concerne le domaine des mécanismes de déploiement d'appendices spatiaux, tels que des antennes ou des générateurs solaires par exemple.

Ces mécanismes comprennent des lignes d'articulations utilisant généralement des composants de motorisation du type ressorts de torsion, ressorts spirales ou joints de Carpentier, permettant de lutter contre les couples résistants et de garantir les marges nécessaires en termes de couples générés en vue d'assurer le déploiement complet des appendices.

Dans ce contexte, les composants de motorisation connus présentent un couple de motorisation évolutif ou variable impliquant une sur-motorisation qui occasionne des chocs en fin de déploiement.

Ces chocs peuvent être importants et générer des dégâts sur les appendices spatiaux en fin de déploiement, ainsi que des couples parasites néfastes au pilotage de l'engin spatial. Pour pallier ce problème, les structures déployables sont dimensionnées et renforcées de manière à pouvoir résister aux chocs de fin courses générés lors de leur déploiement, mais cette solution n'est pas satisfaisante et entraîne notamment un poids accru pour la structure complète.

Certains développements ont mené à la mise au point de mécanismes de déploiement à couple résistif quasi nul. De tels mécanismes, tels que la ligne d'articulations décrite dans la demande de brevet FR 2635077, présentent l'avantage de ne nécessiter que peu de puissance de motorisation et engendrent des chocs de fin de course minimisés. D'autres mécanismes sont le fruit d'améliorations apportées au mécanisme précédent, en termes de masse et de volume notamment. Un tel mécanisme de déploiement est divulgué dans la demande de brevet FR 2902763.

Ces mécanismes d'articulation, pour le déploiement d'appendices spatiaux, présentent néanmoins différents inconvénients non résolus dans l'état de la technique.

Tout d'abord, les mécanismes connus, tels que ceux décrits dans les demandes de brevets FR 2635077 et FR 2902763, ont une capacité angulaire de déploiement limitée à 180°. Par ailleurs, leur cinématique d'ensemble, du fait de leur structure, engendre des couples de motorisation très irréguliers. Enfin, la vitesse de déploiement des mécanismes de déploiement connus, comme déjà évoqué, entraînent une restitution d'énergie en fin de course, donc un choc, car ladite vitesse de déploiement n'est pas régulée.

Un but de l'invention est notamment de pallier les inconvénients précités. Ainsi, pour assurer la possibilité d'effectuer des déploiements à plus de 180° à l'aide d'un mécanisme de motorisation non surdimensionné et n'engendrant que des chocs très minimes en fin de déploiement, la présente invention propose un système de motorisation reposant sur l'utilisation de deux pistes flexibles en forme de spirale, rotatives l'une par rapport à l'autre et configurées pour générer un couple s'appliquant en un point de contact entre les deux pistes flexibles.

Plus précisément, l'invention a pour objet un dispositif de motorisation comprenant deux cylindres d'enroulement sensiblement parallèles, au moins un élément de liaison de forme longitudinale, ledit élément de liaison étant apte à maintenir une distance prédéterminée entre lesdits cylindres d'enroulement, et étant enroulé autour desdits cylindres d'enroulement, ledit élément de liaison présentant par conséquent un point de croisement situé entre lesdits cylindres d'enroulement, le dispositif de motorisation comprenant par ailleurs au moins deux pistes flexibles, une piste flexible étant fixée sur chaque cylindre d'enroulement, lesdites pistes flexibles étant disposées en vis-à-vis et présentant un point de contact, un effort de précontrainte s'appliquant audit point de contact des pistes flexibles sous l'effet dudit élément de liaison ; le dispositif de motorisation selon l'invention se caractérise par le fait que lesdites pistes flexibles présentent une forme de spirale, ladite forme de la spirale étant configurée de telle manière que le point de contact entre les deux pistes flexibles en forme de spirale soit excentré par rapport audit point de croisement de l'élément de liaison, ledit point de contact et ledit point de croisement ne se trouvant pas aligné sur un même axe parallèle aux axes de révolution des cylindres d'enroulement, de sorte qu'un couple dépendant de la distance entre le point de contact et le point de croisement est appliqué audit point de contact, ledit couple étant apte à provoquer la rotation des pistes flexibles entre elles.

Avantageusement, la forme de la spirale est configurée de manière à ce que la distance entre le point de contact entre les pistes flexibles et le point de croisement de l'élément de liaison soit égale à une valeur prédéterminée et en ce que l'élasticité et la rigidité des pistes flexibles sont configurées de manière à contrôler ledit couple s'exerçant audit point de contact entre les pistes flexibles.

Dans un mode de réalisation particulier, ledit couple est constant. Selon un autre mode de réalisation, ledit couple est variable.

Avantageusement, l'élément de liaison peut être constitué de deux lames d'enroulement flexibles.

Avantageusement, l'élément de liaison peut alternativement être constitué d'un ensemble de câbles.

Avantageusement, le dispositif de motorisation selon l'invention peut comprendre une butée de fin de course.

Avantageusement, le dispositif de motorisation selon l'invention peut comprendre une butée anti retour.

Avantageusement, les pistes flexibles peuvent présenter une section variable.

D'autres caractéristiques et avantages de l'invention apparaîtront à l'aide de la description qui suit faite en regard des dessins annexés qui représentent :
- la figure 1a : un mécanisme de déploiement à joint de Carpentier connu, en position stockée ;
- la figure 1b : un mécanisme de déploiement à joint de Carpentier connu, en position déployée ;
- la figure 2 : un schéma du système de motorisation selon l'invention, dans les positions stockée et déployée ;
- les figures 3a et 3b : des exemples de formes de spirale pour les pistes flexibles du système de motorisation selon l'invention ;
- les figures 3c et 3d : deux schémas montrant une piste flexible du système de motorisation selon l'invention, soumise à des efforts de précontrainte différents ;
- la figure 4 : un système de motorisation selon l'invention, équipé d'une butée de fin de course ;
- la figure 5 : un exemple de mise en oeuvre du dispositif selon l'invention avec des pistes d'enroulement à profil variable.

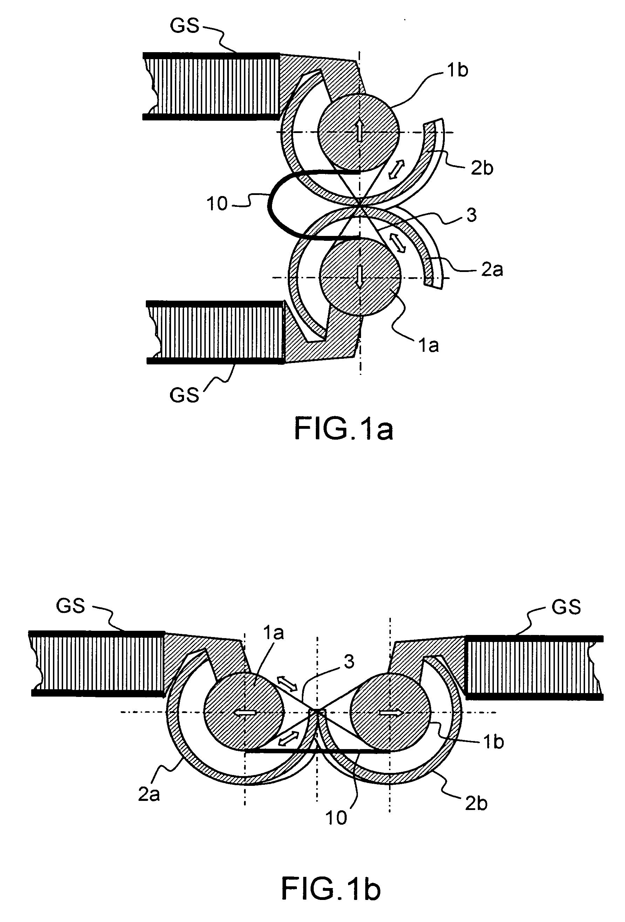

La figure 1 présente un schéma d'un exemple de système de motorisation à joint de Carpentier connu, intégré à un mécanisme de déploiement correspondant à l'enseignement de la demande de brevet FR 0605653. Les cylindres d'enroulement 1a, 1 b sont sensiblement parallèles et maintenus en position par des lames d'enroulement 3, ou par tout autres éléments adaptés, comme par exemple des câbles, enroulées en forme de huit autour desdits cylindres d'enroulement 1a, 1b. Des pistes flexibles 2a, 2b, partiellement circulaires, sont respectivement connectées à chacun des cylindres d'enroulement 1a, 1b et disposées de manière à entourer chacun des cylindres 1a, 1b. Les pistes flexibles 2a, 2b sont disposées en vis-à-vis et en contact l'une de l'autre. Les lames d'enroulement 3 induisent un effort de précontrainte s'appliquant au point de contact entre les pistes flexibles 2a, 2b. Du fait de la géométrie à base circulaire des cylindres d'enroulement 1a, 1b et des pistes d'enroulement 2a, 2b, le point de contact entre lesdites pistes flexibles et le point de croisement desdites lames d'enroulement 3 sont alignées sur un axe longitudinal parallèle et équidistant des axes de révolution des deux cylindres d'enroulement 1a,1b. Des appendices, tels que des générateurs solaires GS, sont fixées sur chaque ensemble cylindre d'enroulement / piste flexible 1 a-2a / 1b-2b.

Comme cela est connu, un joint Carpentier 10 est une bande métallique mince et de section incurvée, utilisée comme ressort de motorisation. De plus, un joint de Carpentier 10 présente l'avantage de maintenir un certain degré de rigidité en configuration ouverte. A la figure 1a, le joint de Carpentier 10 est fermé et le dispositif est en configuration stockée. A la figure 1 b, le joint de Carpentier 10 est ouvert et le dispositif est en configuration déployée.

Comme cela a été évoqué plus haut, et comme le montre la figure 1 b, un inconvénient majeur de ce type de motorisation à joint de Carpentier réside dans le fait qu'il existe une limitation angulaire au déploiement, qui ne peut être supérieur à 180°, du fait de l'aménagement dudit joint de Carpentier 10 sur l'articulation.

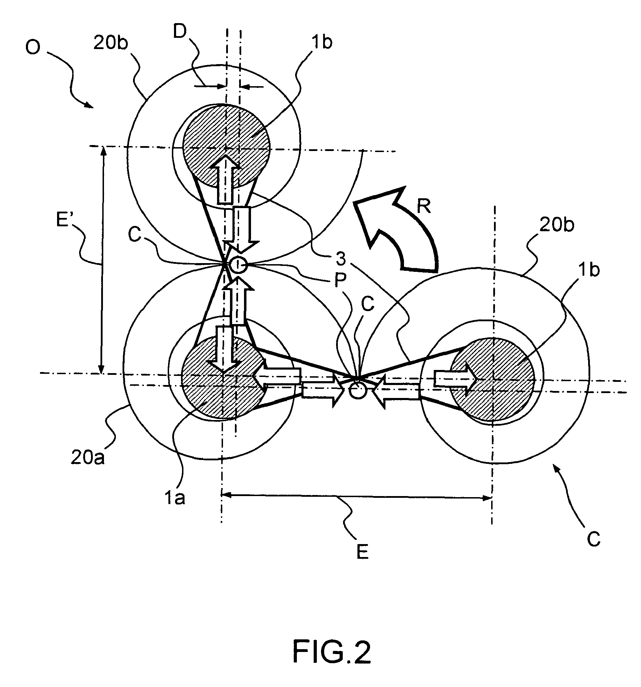

La figure 2 illustre le principe de l'invention. L'architecture de l'articulation est similaire à celle représentée aux figures 1a-1b. Les pistes flexibles 20a, 20b, sont respectivement connectées à chacun des cylindres d'enroulement 1a, 1 b. Le concept novateur du système de motorisation pour mécanisme de déploiement selon l'invention est fondé sur les pistes flexibles 20a, 20b, qui sont constituées de pistes flexibles en forme de spirale. Par rapport aux pistes flexibles 2a, 2b représentées sur les figures 1a, 1b, les présentes pistes flexibles 20a, 20b ont cette forme spécifique de spirale qui permet d'excentrer le point de contact P inter-pistes flexibles 20a, 20b par rapport au point de croisement C des lames d'enroulement 3. Le point de contact P et le point de croisement C ne se trouvent pas sur le même axe parallèle aux axes de révolution des cylindres d'enroulement 1a, 1b. Cet excentrement d'une distance D, du point de contact P par rapport au point de croisement C, entraîne l'excentrement de l'effort de précontrainte induit par les lames d'enroulement 3 et s'appliquant au point de contact P. De ce fait, un couple R est produit entre le point de contact P et le point de croisement C induisant la rotation des pistes flexibles 20a, 20b. La rotation des pistes flexibles 20a, 20b entre elles, du fait de leur forme de spirale, entraîne une variation de l'entraxe des cylindres d'enroulement, qui passe de E en position fermée C à E' en position ouverte O.

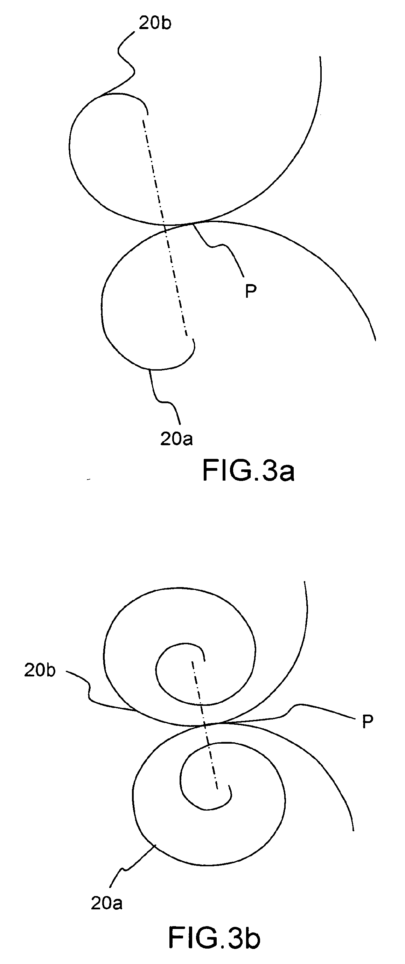

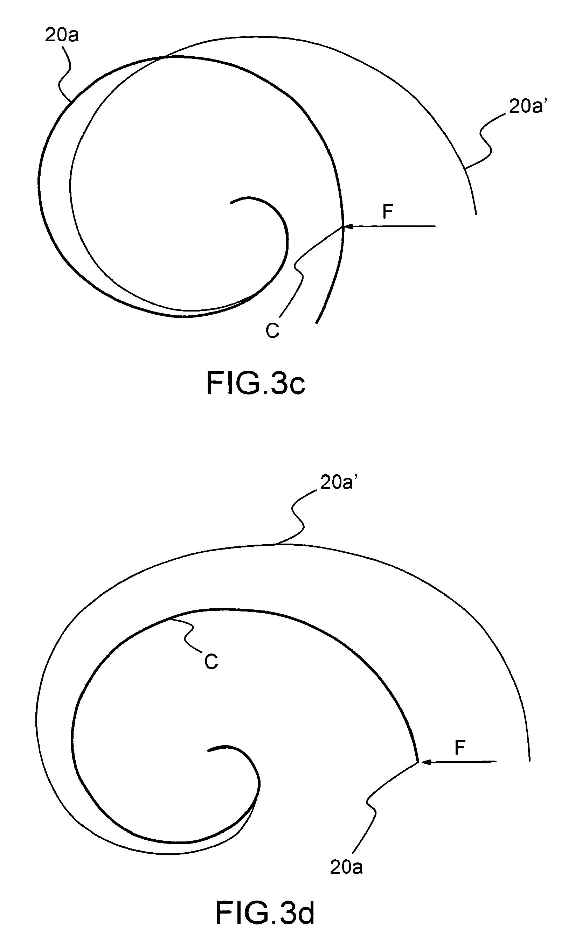

Ce couple R est configurable en fonction de choix effectués sur la forme de la spirale et sur les caractéristiques physiques des pistes flexibles 20a, 20b, en particulier leur élasticité et leur rigidité. Pour augmenter le couple R exercé sur les pistes flexibles, il est possible d'augmenter le déport du point de contact P par rapport au point de croisement C en réalisant une spirale avec un angle d'ouverture important, comme indiqué à la figure 3a, ou d'augmenter l'effort exercé au point de contact P en réalisant une piste flexible plus raide, comme indiqué à la figure 3b. Pour augmenter l'effort exercé au point de contact C, il est encore possible d'augmenter la flèche des pistes flexibles 20a-20b. Aux figures 3c-3d, on a représenté la piste flexible 20a soumise à un effort de précontrainte F, la piste flexible 20a' correspondant à la piste flexible 20a mais non soumise à un effort de précontrainte. La flèche de la piste flexible 20a à la figure 3c est supérieure à ce qu'elle est à la figure 3d, de sorte que l'effort appliqué au point de contact C est plus grand dans la configuration de la figure 3c.

Pour générer un couple R constant pendant la phase de déploiement, une forme de spirale d'Archimède est préférée.

L'invention prévoit également la possibilité d'adapter le couple R de motorisation afin de compenser certains couples de frottement variables introduits par des éléments externes à l'articulation. Il peut s'agir typiquement des torons de câbles électriques acheminant l'électricité entres deux panneaux de générateur solaire GS. On peut ainsi avoir une marge de motorisation quasi constante tout au long du déploiement. Le besoin en motorisation est alors ajusté au strict nécessaire

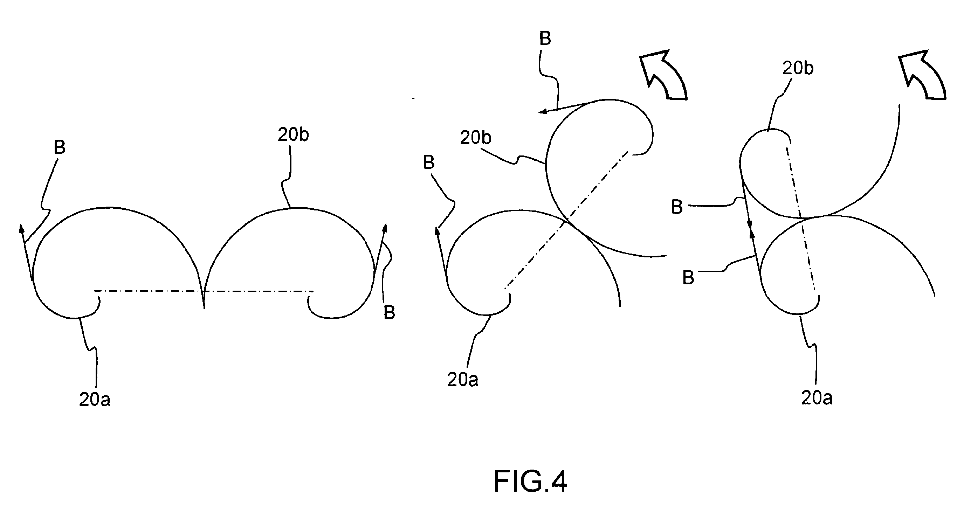

Selon un mode de réalisation de l'invention, le système comprend une butée de fin de course B, représentée à la figure 4, et apte à stopper l'ouverture du système dans une position appropriée.

Il est noté par ailleurs que ladite ouverture peut être supérieure à 180°.

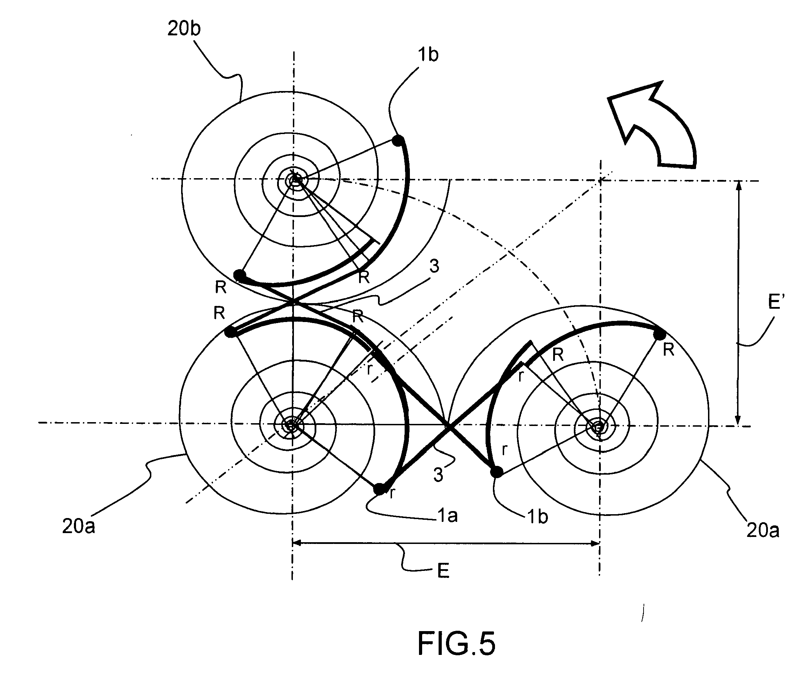

Selon un mode de réalisation particulier représenté à la figure 5, un système spécifique peut être prévu pour compenser les variations de l'excentrement D qui surviennent au cours de l'ouverture du système de motorisation. Un tel système de compensation a pour objectif de limiter la flèche des pistes flexibles 20a-20b. En effet, les lames d'enroulement 3 sont très rigides suivant leur axe. La mise en place de pistes d'enroulement 1a et 1b évolutives permet un rapprochement des pistes flexibles 20a et 20b pendant l'ouverture de l'articulation. Le profil de ces pistes d'enroulement 1a et 1b est réalisé en fonction du profil de la forme de spirale des pistes flexibles 20a-20b afin de garantir la flèche desdits pistes flexibles 20a-20b, ainsi que le couple généré. Les lames d'enroulement 3 sont ainsi enroulées sur des pistes d'enroulement 1a et 1b de petit diamètre en configuration stockée, correspondant au rayon r sur la figure 5, puis sur des pistes d'enroulement 1a et 1b de grand diamètre en configuration déployée, correspondant au rayon R sur la figure 5. Cet aménagement permet de réduire l'entraxe, qui passe de E à E', entre les deux pistes d'enroulement 1a et 1 b et les pistes flexibles 20a et 20b.

La figure 5 montre ainsi un exemple de piste d'enroulement 1a et 1 b permettant l'obtention d'un couple constant.

En résumé, l'invention a pour principal avantage de proposer une solution de système de motorisation automatique pour un mécanisme de déploiement d'appendices spatiaux. Le système de motorisation selon l'invention permet une capacité angulaire pouvant dépasser 180°. De plus, l'invention permet de maîtriser le couple généré pour effectuer l'ouverture du mécanisme de déploiement ; ledit couple généré peut être adapté au besoin strict de motorisation en fonction des couples résistant s'y opposant. Un des exemples d'application pourrait être un couple de motorisation constant.

Le système selon l'invention présente également l'avantage de sa simplicité mécanique, puisqu'elle comprend peu de pièces, induisant une certaine simplicité d'assemblage. Enfin, la configuration des pistes flexibles en forme de spirale implique une faible surface de contact, et donc des frottements minimes, ce qui favorise le fait que le système de motorisation n'a pas besoin d'être surdimensionné et que le risque de choc en fin de course est réduit.

## Revendications

1. Dispositif de motorisation comprenant deux cylindres d'enroulement (1a, 1b) sensiblement parallèles, au moins un élément de liaison (3) de forme longitudinale, ledit élément de liaison (3) étant apte à maintenir une distance prédéterminée entre lesdits cylindres d'enroulement (1a,1b), et étant enroulé autour desdits cylindres d'enroulement (1a,1b), ledit élément de liaison (3) présentant par conséquent un point de croisement (C) situé entre lesdits cylindres d'enroulement (1a, 1b), et au moins deux pistes flexibles (20a,20b), une piste flexible (20a-20b) étant fixée sur chaque cylindre d'enroulement (1a,1b), lesdites pistes flexibles (20a,20b) étant disposées en vis-à-vis et présentant un point de contact (P), un effort de précontrainte s'appliquant audit point de contact (P) des pistes flexibles (20a,20b) sous l'effet dudit élément de liaison (3), **caractérisé en ce que** lesdites pistes flexibles (20a,20b) présentent une forme de spirale, ladite forme de la spirale étant configurée de telle manière que le point de contact (P) entre les deux pistes flexibles (20a,20b) en forme de spirale soit excentré par rapport audit point de croisement (C) de l'élément de liaison (3), ledit point de contact (P) et ledit point de croisement (C) ne se trouvant pas aligné sur un même axe parallèle aux axes de révolution des cylindres d'enroulement (1a, 1b), de sorte qu'un couple (R) dépendant de la distance (D) entre le point de contact (P) et le point de croisement (C) est appliqué audit point de contact (P), ledit couple (R) étant apte à provoquer la rotation des pistes flexibles (20a,20b) entre elles.

2. Dispositif selon la revendication 1, **caractérisé en ce que** la forme de la spirale est configurée de manière à ce que la distance (D) entre le point de contact (P) entre les pistes flexibles (20a,20b) et le point de croisement (C) de l'élément de liaison (3) soit égale à une valeur prédéterminée et **en ce que** l'élasticité et la rigidité des pistes flexibles (20a,20b) sont configurées de manière à contrôler ledit couple (R) s'exerçant audit point de contact (P) entre les pistes flexibles (20a,20b).

3. Dispositif selon l'une des revendications précédentes, **caractérisé en ce que** ledit couple (R) est constant.

4. Dispositif selon l'une des revendications 1 à 2, **caractérisé en ce que** ledit couple (R) est variable.

5. Dispositif selon l'une des revendications précédentes, **caractérisé en ce que** l'élément de liaison (3) est constitué de deux lames d'enroulement flexibles.

6. Dispositif selon l'une des revendications 1 à 4, **caractérisé en ce que** l'élément de liaison (3) est constitué d'un ensemble de câbles.

7. Dispositif selon l'une des revendications précédentes, **caractérisé en ce qu'**il comprend une butée de fin de course (B).

8. Dispositif selon l'une des revendications précédentes, **caractérisé en ce qu'**il comprend une butée anti retour.

9. Dispositif selon l'une des revendications précédentes, **caractérisé en ce que** les pistes flexibles (20a,20b) présentent une section variable.

## Patentansprüche

1. Motorisierungsvorrichtung, die Folgendes umfasst: zwei im Wesentlichen parallele Wickelzylinder (1a, 1b), wenigstens ein Verbindungselement (3) mit einer Längsform, wobei das Verbindungselement (3) so ausgelegt ist, dass es einen vorbestimmten Abstand zwischen den Wickelzylindern (1a, 1b) hält und um die Wickelzylinder (1a, 1b) gewickelt wird, wobei das Verbindungselement (3) folglich einen zwischen den Wickelzylindern (1a, 1b) befindlichen Kreuzungspunkt (C) und wenigstens zwei flexible Bahnen (20a, 20b) hat, wobei eine flexible Bahn (20a-20b) an jedem Wickelzylinder (1a, 1b) befestigt ist, wobei die flexiblen Bahnen (20a, 20b) einander zugewandt angeordnet sind und einen Kontaktpunkt (P) haben, wobei eine Vorspannkraft auf den Kontaktpunkt (P) der flexiblen Bahnen (20a, 20b) unter der Wirkung des Verbindungselements (3) aufgebracht wird, **dadurch gekennzeichnet, dass** die flexiblen Bahnen (20a, 20b) spiralförmig sind, wobei die Spiralform so konfiguriert ist, dass der Kontaktpunkt (P) zwischen den zwei spiralförmigen flexiblen Bahnen (20a, 20b) exzentrisch zum Kreuzungspunkt (C) des Verbindungselements (3) ist, wobei der Kontaktpunkt (P) und der Kreuzungspunkt (C) nicht auf derselben Achse parallel zu den Drehachsen der Wickelzylinder (1a, 1b) fluchten, so dass ein Drehmoment (R), das vom Abstand (D) zwischen dem Kontaktpunkt (P) und dem Kreuzungspunkt (C) abhängig ist, auf den Kontaktpunkt (P) aufgebracht wird, wobei das Drehmoment (R) so gewählt ist, dass es die Rotation der flexiblen Bahnen (20a, 20b) zwischen sich bewirkt.

2. Vorrichtung nach Anspruch 1, **dadurch gekennzeichnet, dass** die Form der Spirale so konfiguriert ist, dass der Abstand (D) zwischen dem Kontaktpunkt (P) zwischen den flexiblen Bahnen (20a, 20b) und dem Kreuzungspunkt (C) des Verbindungselements (3) gleich einem vorbestimmten Wert ist, und dadurch, dass Elastizität und Starrheit der flexiblen Bahnen (20a, 20b) so konfiguriert sind, dass das Drehmoment (R), das am Kontaktpunkt (P) zwischen den flexiblen Bahnen (20a, 20b) aufgebracht wird, geregelt wird.

3. Vorrichtung nach einem der vorherigen Ansprüche, **dadurch gekennzeichnet, dass** das Drehmoment (R) konstant ist.

4. Vorrichtung nach einem der Ansprüche 1 bis 2, **dadurch gekennzeichnet, dass** das Drehmoment (R) variabel ist.

5. Vorrichtung nach einem der vorherigen Ansprüche, **dadurch gekennzeichnet, dass** das Verbindungselement (3) von zwei flexiblen Wickelblättern gebildet wird.

6. Vorrichtung nach einem der Ansprüche 1 bis 4, **dadurch gekennzeichnet, dass** das Verbindungselement (3) von einem Kabelsatz gebildet wird.

7. Vorrichtung nach einem der vorherigen Ansprüche, **dadurch gekennzeichnet, dass** es einen Wegendeanschlag (B) umfasst.

8. Vorrichtung nach einem der vorherigen Ansprüche, **dadurch gekennzeichnet, dass** es einen Rücklaufsperranschlag umfasst.

9. Vorrichtung nach einem der vorherigen Ansprüche, **dadurch gekennzeichnet, dass** die flexiblen Bahnen (20a, 20b) einen variablen Querschnitt haben.

## Claims

1. A motorisation device comprising two substantially parallel winding cylinders (1a, 1b), at least one linking element (3) of longitudinal shape, said linking element (3) being designed to maintain a predetermined distance between said winding cylinders (1a, 1b) and being wound around said winding cylinders (1a, 1b), said linking element (3) consequently having a crossing point (C) that is located between said winding cylinders (1a, 1b) and at least two flexible tracks (20a, 20b), one flexible track (20a-20b) being fixed on each winding cylinder (1a, 1b), said flexible tracks (20a, 20b) being disposed facing one another and having a contact point (P), with a pre-stressing force being applied to said contact point (P) of said flexible tracks (20a, 20b) under the effect of said linking element (3), **characterised in that** said flexible tracks (20a, 20b) are helical shaped, said helical shape being configured so that said contact point (P) between said two helical shaped flexible tracks (20a, 20b) is eccentric relative to said crossing point (C) of said linking element (3), said contact point (P) and said crossing point (C) not being aligned on the same axis parallel to the axes of rotation of said winding cylinders (1a, 1b), so that a torque (R) that depends on the distance (D) between said contact point (P) and said crossing point (C) is applied to said contact point (P), said torque (R) being designed to instigate the reciprocal rotation of said flexible tracks (20a, 20b).

2. The device according to claim 1, **characterised in that** the shape of the helical is configured so that the distance (D) between said contact point (P) between said flexible tracks (20a, 20b) and said crossing point (C) of said linking element (3) is equal to a predetermined value, and **in that** the elasticity and the rigidity of said flexible tracks (20a, 20b) are configured so as to control said torque (R) that is exerted at said contact point (P) between said flexible tracks (20a, 20b).

3. The device according to any one of the preceding claims, **characterised in that** said torque (R) is constant.

4. The device according to any one of claims 1 to 2, **characterised in that** said torque (R) is variable.

5. The device according to any one of the preceding claims, **characterised in that** said linking element (3) is constituted by two flexible winding strips.

6. The device according to any one of claims 1 to 4, **characterised in that** said linking element (3) is constituted by a set of cables.

7. The device according to any one of the preceding claims, **characterised in that** it comprises a limit stop (B).

8. The device according to any one of the preceding claims, **characterised in that** it comprises a non-return stop.

9. The device according to any one of the preceding claims, **characterised in that** said flexible tracks (20a, 20b) have a variable cross-section.
